# EUROPEAN PATENT APPLICATION

(11) **EP 2 211 553 A1**
(43) Date of publication of application: **28.07.2010**
(21) Application number: 07831760.9
(22) Date of filing: 13.11.2007
(51) Int. Cl.: H04N 7/32

(54) **ENCODER AND DECODER**

(71) Applicant: Fujitsu Limited, Kawasaki-shi, Kanagawa 211-8588 (JP)
(72) Inventor: KAMITO, Takafumi, Fukuoka-shi Fukuoka 814-8588 (JP); NISHIDA, Masaru, Fukuoka-shi Fukuoka 814-8588 (JP); KANEMORI, Wataru, Fukuoka-shi Fukuoka 814-8588 (JP); TSURUTA, Tohru, Kawasaki-shi Kanagawa 211-8588 (JP)
(74) Representative: Wilding, Frances Ward
(86) International application number: PCT/JP2007/072030
(87) International publication number: WO 2009/063554

(57) **Abstract**

In the encoding/decoding system, when encoding an image, the image encoding device (100) divides the encoding-target image into several subimages, and executes the encoding on the subimages in a direction moving away from the boundary of the divided subimages. In addition, when executing the encoding process, the image encoding device (100) transmits pixels in the vicinity of the boundary of the subimages as uncompressed data, without encoding the pixels. Furthermore, when executing an encoding process, the image encoding device (100) changes quantizing steps that are used in the encoding in accordance with a distance from the boundary so that an amount of data greater than or equal to a predetermined value can be assigned for the vicinity of the boundary by use of smaller quantizing steps.

## Description

### TECHNICAL FIELD

The present invention relates to an encoding device for realizing image encoding and a decoding device therefor.

### BACKGROUND ART

High definition televisions (HDTVs) that can display high definition images are now spreading, and high-efficiency transmission of signals of a high sampling rate (signals of high definition images for displaying on the HDTV or the like) has been demanded. For this reason, Patent Document 1 discloses a method of efficiently transmitting signals of a high sampling rate by dividing an image into several subimages and performing parallel processing thereon (see Patent Document 1, for example).

Here, an image segmentation encoding/decoding system disclosed in Patent Document 1 (hereinafter, "encoding/decoding system") is explained. FIG. 19 is a diagram for illustrating a structure of a conventional encoding/decoding system. As illustrated in this drawing, the encoding/decoding system includes an image input device (camera) 11, an image encoding device 12, an image decoding device 13, and an image displaying device 14, where the image encoding device 12 and the image decoding device 13 are connected to each other by way of a transmission channel 15.

The image input device 11 is a device that takes an image and outputs the taken image as an input image to the image encoding device 12. The image encoding device 12 divides the input image into several subimages, encodes these subimages, and outputs them to the image decoding device 13.

The image decoding device 13 is a device that decodes the encoded subimages and generates an output image by combining the decoded subimages. The image displaying device 14 is a device that displays the output image generated by the image decoding device on a display or the like.

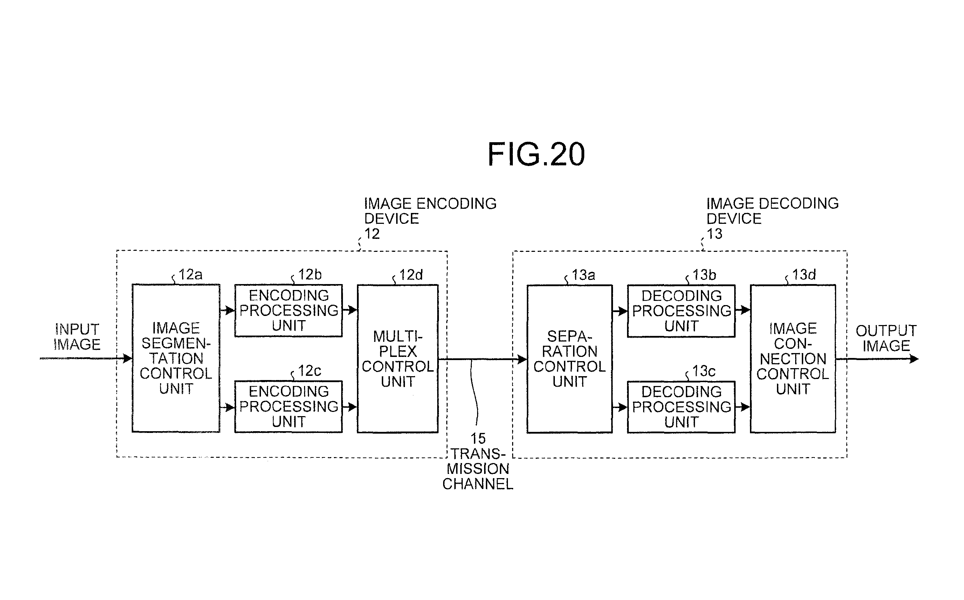

FIG. 20 is a functional block diagram for illustrating the structures of the conventional image encoding device 12 and image decoding device 13. As illustrated in this drawing, the image encoding device 12 includes an image segmentation control unit 12a, encoding processing units 12b and 12c, and a multiplex control unit 12d, while the image decoding device 13 includes a separation control unit 13a, decoding processing units 13b and 13c, and an image connection control unit 13d.

The image segmentation control unit 12a is a processing unit that divides the input image that has been input, into several subimages and outputs the divided subimages to the encoding processing units 12b and 12c.
The encoding processing units 12b and 12c are processing units that perform an encoding process (such as DPCM coding) onto the input subimages and output the encoded data, which is the encoded subimages, to the multiplex control unit 12d.

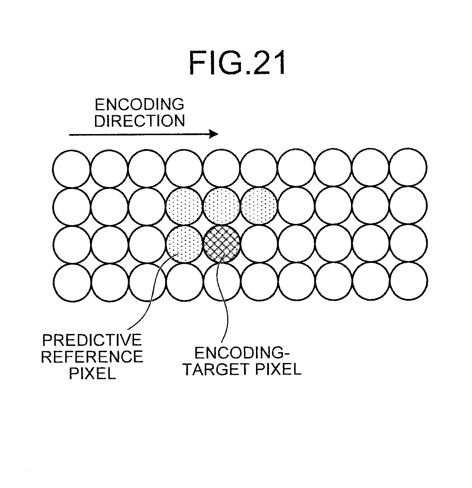

The DPCM coding executed by the encoding processing units 12b and 12c is now explained. FIG. 21 is a diagram for explaining the DPCM coding. The DPCM coding improves the compression rate by adopting pixels (adjacent pixels) that are adjacent to pixels targeted for encoding (encoding-target pixels).

In a nature image or the like, a strong correlation is often established between adjacent pixels. Thus, in the DPCM coding, adjacent pixels are incorporated as predictive reference pixels, and a predictive pixel is calculated from an average value or the like of the predictive reference pixels. A difference between the predictive pixel and the encoding-target pixel is obtained, and the difference value is encoded. By encoding the difference value, information can be reduced from the encoding of the encoding-target pixel itself.

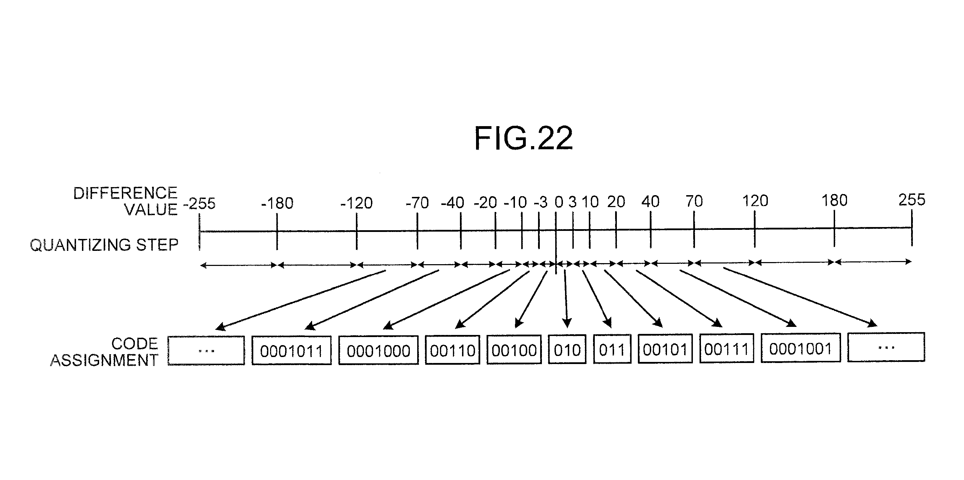

In the DPCM coding executed by the encoding processing units 12b and 12c, a quantizing process is performed onto the difference value, and a code is assigned to the quantized value that is determined. FIG. 22 is a diagram for explaining the quantizing process.

As illustrated in FIG. 22, in the quantizing process, difference values are sorted in accordance with the quantizing steps, and the sorted difference values are replaced with quantization representative values of corresponding steps. For example, a difference value "3" is replaced with "010". In entropy coding, small bit values from the vicinity of 0 are assigned.

If the quantization is divided into smaller steps, quantizing errors can be reduced and image degradation can be suppressed, but the amount of information is increased because the number of bits of codes that are assigned to large difference values is increased.

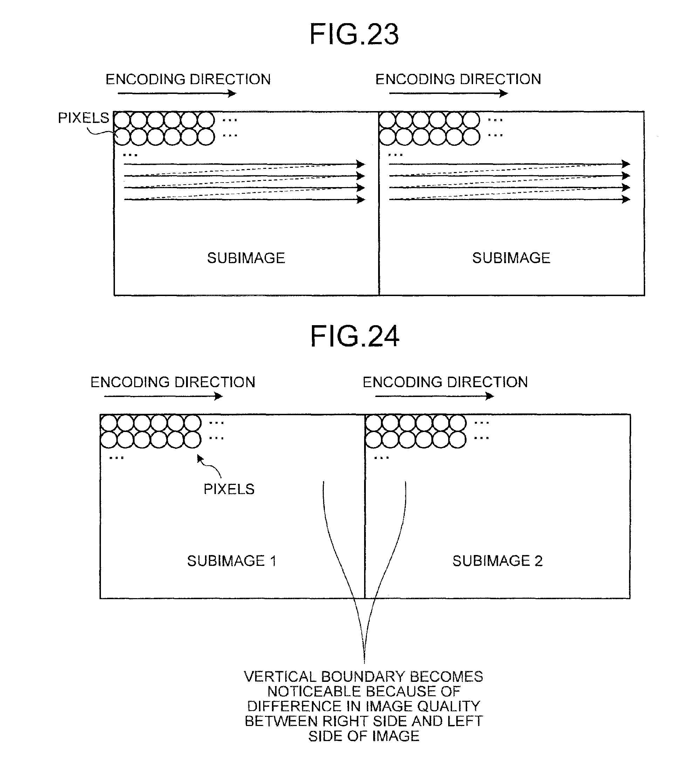

FIG. 23 is a diagram for illustrating the order of encoding performed by the encoding processing units 12b and 12c. The encoding processing units 12b and 12c perform encoding processes in parallel onto subimages. As illustrated in FIG. 23, they encode the input subimages in the image scanning direction sequentially from the top left corner of the images.

In FIG. 20, the multiplex control unit 12d is a processing unit that acquires the encoded data from the encoding processing units 12b and 12c, generates multiplexed encoded data by combining the encoded data that is acquired, and outputs the multiplexed, encoded data that is generated to the image decoding device 13.

The separation control unit 13a is a processing unit that receives the multiplexed encoded data through the transmission channel 15 and separates the multiplexed encoded data that is received into items of encoded data corresponding to the subimages. The separation control unit 13a outputs the separated encoded data items to the decoding processing units 13b and 13c.

The decoding processing units 13b and 13c are processing units that perform decoding processes onto the encoded data that is input, and output the decoded subimages to the image connection control unit 13d. The image connection control unit 13d is a processing unit that acquires the subimages from the decoding processing units 13b and 13c, generates the original image by combining the acquired subimages, and displays the generated image as an output image on a display or the like.

As discussed above, in the conventional encoding/decoding system, an input image is divided and multiple cores (encoding processing units 12b and 12c) are adopted in parallel so that an image of a size that not processible by a single encoding core can be divided and encoded, and highly efficient transmission of signals of a high sampling rate can be thereby realized.

Patent Document 2 discloses a technology of obtaining original image data consisting of N×N pixel blocks, quantizing the original image data, and performing scanning by reversing the scanning direction for each line in a block so that distortion of the block can be reduced. Patent Document 3 discloses a technology of suppressing ringing effects in the edge periphery that are typically caused in the transform coding technology by use of an efficient DPCM method that eliminates the correlation of pixel values of a block.

[Patent Document 1] Japanese Laid-open Patent Publication No. 08-46961
[Patent Document 2] Japanese Laid-open Patent Publication No. 09-275559
[Patent Document 3] Japanese Laid-open Patent Publication No. 05-63988

### DISCLOSURE OF INVENTION

### PROBLEM TO BE SOLVED BY THE INVENTION

However, according to the above conventional technologies, when the encoded subimages are decoded and combined, there is a difference in the image quality between the boundaries of the combined subimages, making the joint noticeable.

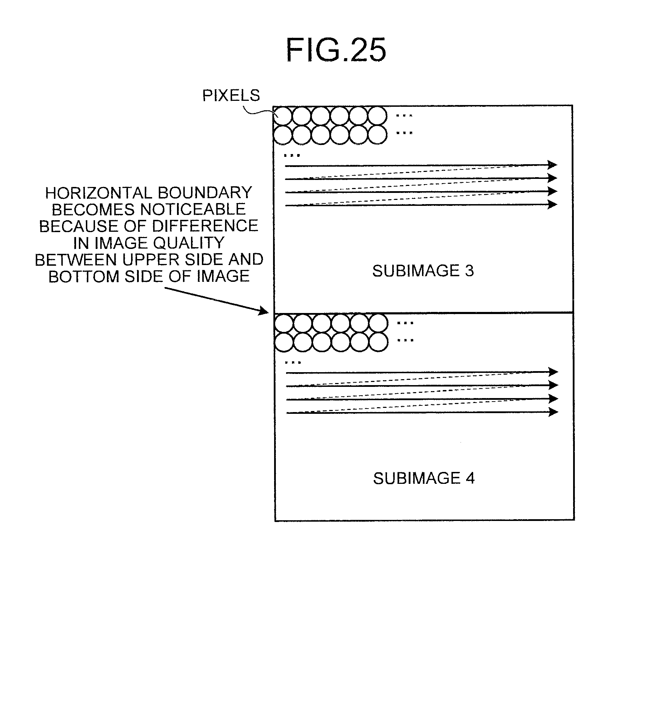

FIGS. 24 and 25 are diagrams for explaining the problems residing in the conventional technologies. When real-time coding is performed by the constant bit rate (CBR) method, and especially when the DPCM coding is adopted where subimages are sequentially coded from the left side, the amount of data is cut down on the right side of the subimages to limit the encoded data to a certain amount. As a result, the image quality of the right side of a decoded subimage tends to be degraded in comparison with the left side (see FIG. 24).

In other words, as indicated in FIG. 24, when a subimage 1 and a subimage 2 are horizontally adjacent to each other, the image quality of the boundary of the subimage 1 is degraded in comparison with that of the boundary of the subimage 2, and thus the joint of the subimage 1 and the subimage 2 becomes noticeable.

Moreover, when controlling the information amount for each subimage, the data mount is reduced in the bottom side of a subimage to keep the encoded data within a certain amount with a method of encoding a subimage sequentially from the top left corner. As a result, the image quality of the lower side of the decoded subimage may be degraded with reference to the upper side (see FIG. 25).

In other words, as illustrated in FIG. 25, when a subimage 3 and a subimage 4 are vertically adjacent to each other, the image quality of the boundary of the subimage 3 becomes lower than that of the boundary of the subimage 4, which makes the joint of the subimage 3 and the subimage 4 noticeable.

More specifically, even when the encoded data is kept within a certain amount, it is still very important to solve a challenge to reduce the difference in image quality at the joint of adjacent subimages and improve the quality of an image obtained after connecting subimages.

The present invention has been conceived in light of the above, and its purpose is to offer an encoding device and a decoding device that can reduce the difference in image quality at the joint of adjacent subimages and improve the quality of an image obtained after connecting subimages even when the encoded data is kept within a certain amount.

### MEANS FOR SOLVING PROBLEM

To solve the problems and achieve the object, the present invention is an encoding device for encoding an image that includes an image dividing unit that divides an encoding-target image into a plurality of subimages; and an encoding executing unit that acquires the subimages that are divided by the image dividing unit and executes the encoding of the subimages in a direction moving away from a boundary of the subimages that are acquired.

In the present invention, the encoding executing unit executes the encoding on pixels that are not positioned within a predetermined number of pixels away from the boundary of the subimage.

In the present invention, the encoding executing unit changes quantizing steps used in the encoding in accordance with a distance from the boundary of the subimage.

The present invention further includes an output unit that outputs the subimage encoded by the encoding executing unit, wherein, when outputting the subimage that is encoded, the output unit adds segmentation information representing a segmentation method of the image dividing unit and positional information of pixels of the subimages.

The present invention is a decoding device for decoding an original image by decoding a plurality of subimages that are encoded and combining the subimages that are decoded at boundaries. The decoding device includes a separating unit that separates, when receiving a plurality of subimages that are encoded and form the original image, the subimages that are acquired; and a decoding executing unit that acquires the subimages separated by the separating unit and executes the decoding on the subimages in a direction moving away from a boundary of the subimages that are acquired.

### EFFECT OF THE INVENTION

According to the present invention, the encoding device divides an encoding-target image into several subimages, and encodes each divided subimage in a direction moving away from the boundary of the subimage. Thus, even when DPCM coding, with which image equality is degraded gradually in accordance with the encoding order, is performed to improve the transmission efficiency, a difference in image quality at the boundaries of the subimages can be reduced, and image degradation can be suppressed.

Furthermore, according to the present invention, the encoding device transmits pixels near the boundaries of the subimages as uncompressed data without encoding them, and thus prevents the image from being degraded at the boundaries so that the joint of the connected subimages can be made less noticeable.

Still further, according to the present invention, the encoding device changes quantizing steps that are used in encoding in accordance with a distance from the boundary, and allocates a larger amount of data than a predetermined value to the vicinity of the boundary by using smaller quantizing steps. Thus, degradation of image quality can be suppressed, and the joint can be made less noticeable.

Still further, according to the present invention, the encoding device adds segmentation information indicating an image segmenting method and positional information of pixels of an encoded subimage when outputting the subimage. Thus, a process of decoding the encoded image data can be efficiently executed.

Still further, according to the present invention, when acquiring multiple subimages that constitute an image, the decoding device separates the acquired subimages and executes decoding in a direction moving sway from the boundary of the image. Thus, the image data output after being combined can be prevented from being degraded.

### BRIEF DESCRIPTION OF DRAWING

FIG. 1 is a diagram (1) for explaining the overview and features of an encoding device according to an embodiment.
FIG. 2 is a diagram (2) for explaining the overview and features of the encoding device according to the present embodiment.
FIG. 3 is a diagram (3) for explaining the overview and features of the encoding device according to the present embodiment.
FIG. 4 is a diagram (4) for explaining the overview and features of the encoding device according to the present embodiment.
FIG. 5 is a diagram (5) for explaining the overview and features of the encoding device according to the present embodiment.
FIG. 6 is a diagram (6) for explaining the overview and features of the encoding device according to the present embodiment.
FIG. 7 is a diagram (7) for explaining the overview and features of the encoding device according to the present embodiment.
FIG. 8 is a diagram for illustrating the structure of an encoding/decoding system according to the present embodiment.
FIG. 9 is a functional block diagram for illustrating the structures of an encoding direction control unit and an encoding processing unit.
FIG. 10 is a functional block diagram for illustrating the structure of a multiplex control unit.
FIG. 11 is a diagram for illustrating an example data structure of multiplexed data.
FIG. 12 is a functional block diagram for illustrating the structure of a decoding processing unit.
FIG. 13 is a functional block diagram for illustrating the structure of an image connection control unit.
FIG. 14 is a diagram for explaining a coded data decoding process according to the present embodiment.
FIG. 15 is a flowchart for illustrating the process procedure of the image encoding device according to the present embodiment.
FIG. 16 is a flowchart for illustrating the process procedure of an image decoding device according to the present embodiment.
FIG. 17 is a diagram for illustrating a hardware structure of a computer that constitutes the image encoding device according to an embodiment.
FIG. 18 is a diagram for illustrating a hardware structure of a computer that constitutes the image decoding device according to an embodiment.

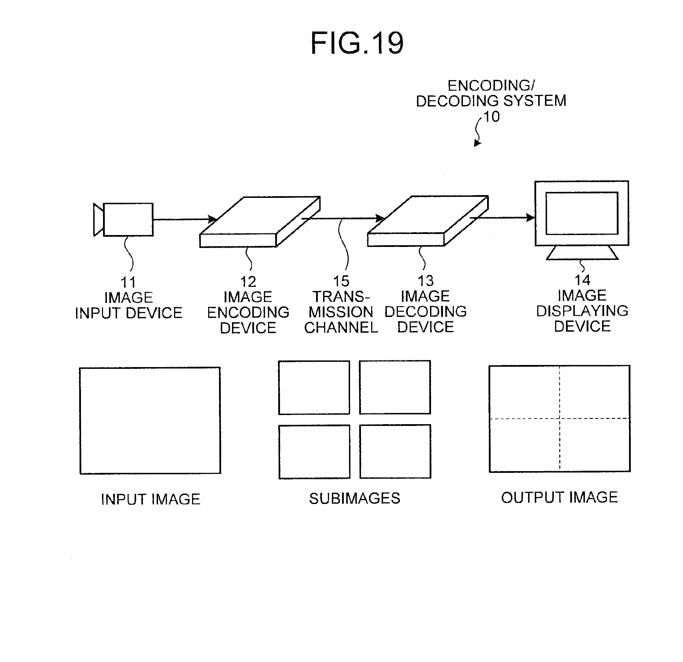

FIG. 19 is a diagram for illustrating the structure of a conventional encoding/decoding system.
FIG. 20 is a functional block diagram for illustrating the structures of a conventional image encoding device and image decoding device.
FIG. 21 is a diagram for explaining DPCM coding.
FIG. 22 is a diagram for explaining a quantizing process.
FIG. 23 is a diagram for illustrating the order of encoding executed by the encoding processing unit.
FIG. 24 is a diagram (1) for explaining a problem residing is the conventional technologies.
FIG. 25 is diagram (2) for explaining a problem residing in the conventional technologies.

### EXPLANATIONS OF LETTERS OR NUMERALS

- 10: Encoding/decoding system
- 11: Image input device
- 12, 100: Image encoding device
- 12a, 110: Image segmentation control unit
- 12b, 12c, 140, 150: Encoding processing units
- 12d, 160: Multiplex control unit
- 13, 200: Image decoding device
- 13a, 210: Separation control unit
- 13b, 13c, 220, 230: Decoding processing units
- 13d, 240: Image connection control unit
- 14: Image displaying device
- 15: Transmission channel
- 50: Encoding/decoding system
- 60, 70: computer
- 61, 71: Input device
- 62, 72: Monitor
- 63, 73: RAM
- 63a, 73a, 68a, 78a: Various kinds of data
- 64, 74: ROM
- 65, 75: Medium reading device
- 66, 76: Network interface
- 67, 77: CPU
- 67a: Encoding process
- 68, 78: HDD
- 68b: Encoding program
- 69, 79: Bus
- 77a: Decoding process
- 78b: Decoding program
- 120,130: Encoding direction control unit
- 121: Direction control units
- 122, 242: Frame memory
- 141: Quantizing unit
- 142: Inverse quantizing unit
- 143, 223: Line memory
- 144, 224: Predicting unit
- 145: Encoding unit
- 146, 225: Selecting unit
- 161: Header generating unit
- 162: Arbitrating unit
- 163: Memory
- 164: Multiplexing unit
- 221: Decoding unit
- 222: Inverse quantizing unit
- 241: Connection control unit

### BEST MODE(S) FOR CARRYING OUT THE INVENTION

Exemplary Embodiments of an encoding device and a decoding device according to the present invention are explained in detail below with reference to the drawings. The invention is not limited to the embodiments.

### [Embodiments]

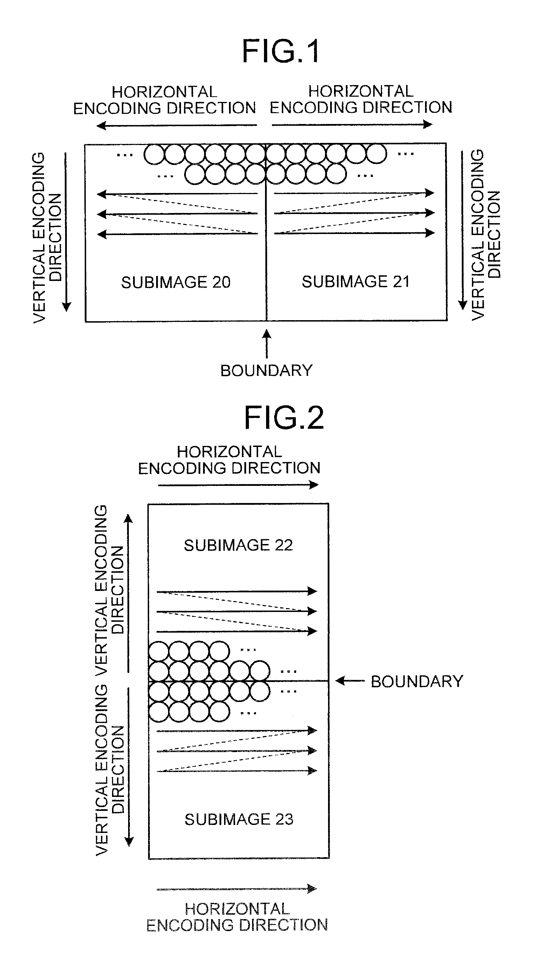

The overview and features of an encoding device (encoding/decoding system) according to an embodiment are explained first. FIGS. 1 to 7 are diagrams for explaining the overview and features of the encoding device according to the present embodiment. The encoding device according to the present embodiment divides an encoding-target image into several subimages, and encodes the subimages in a direction moving away from the boundary of the divided subimages.

In an example illustrated in FIG. 1, an image is divided into subimages 20 and 21, where the subimages 20 and 21 are horizontally adjacent to each other, forming a boundary between the subimage 20 and the subimage 21 (one boundary). In the example of this drawing, the encoding device starts encoding in a horizontal direction from the boundary, and performs the encoding sequentially in a direction moving away from the boundary.

More specifically, the subimage 20 is subjected to the encoding from the boundary to the left. When the left end is reached, the encoding is shifted to one line below the current line and performed again sequentially from the boundary to the left. Moreover, the subimage 21 is subjected to the encoding from the boundary to the right. When the right end is reached, the encoding is shifted to one line below the current line and performed again sequentially from the boundary to the right.

In an example illustrated in FIG. 2, an image is divided into subimages 22 and 23, where the subimages 22 and 23 are vertically adjacent to each other, forming a boundary between the subimage 22 and the subimage 23 (one boundary). In the example of this drawing, the encoding device starts encoding in a vertical direction from the boundary and performs the encoding sequentially in a direction moving away from the boundary.

More specifically, the subimage 22 is subjected to the encoding horizontally from the left side of the bottom end (boundary) to the right side. When the right end is reached, the encoding is shifted to one line above the current line and performed again from the left end to the right end. Moreover, the subimage 23 is subjected to the encoding horizontally from the left side of the top end (boundary) to the right side. When the right end is reached, the encoding is shifted to one line below the current line and performed again from the left end to the right end.

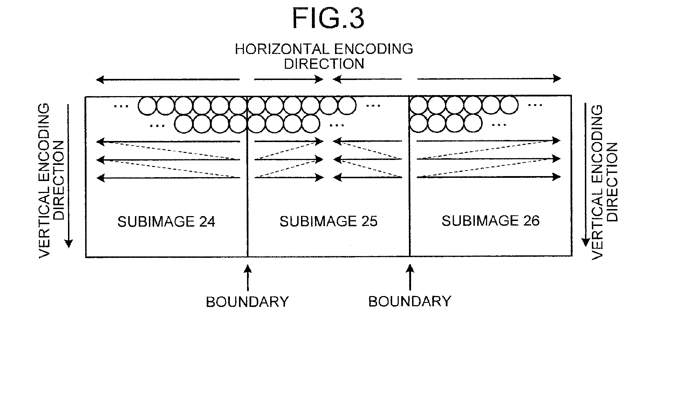

In an example illustrated in FIG. 3, an image is divided into subimages 24, 25, and 26, where the subimages 24 and 25 are horizontally adjacent to each other, and the subimages 25 and 26 are horizontally adjacent to each other. There are boundaries between the subimage 24 and the subimage 25 and between the subimage 25 and the subimage 26 (two boundaries). In the example of this drawing, the encoding device starts encoding in a horizontal direction from the boundaries for the subimage 24, 26, and performs the encoding sequentially in directions moving away from the boundaries. Moreover, the encoding device performs the encoding onto the subimage 25 in order of a horizontal direction from the two boundaries toward the center.

More specifically, the encoding device performs the encoding onto the subimage 24 from the boundary to the left. When the left end is reached, the encoding device shifts to one line below the current line and performs the encoding again from the boundary to the left. Moreover, the encoding device performs the encoding onto the subimage 25 from the left and right boundaries toward the center, and when the center is reached, the encoding device shifts to one line below the current line and performs the encoding again from the left and right boundaries toward the center.

The encoding device performs the encoding onto the subimage 26 from the boundary to the right. When the right end is reached, the encoding device shifts to one line below the current line and performs the encoding again from the boundary to the right.

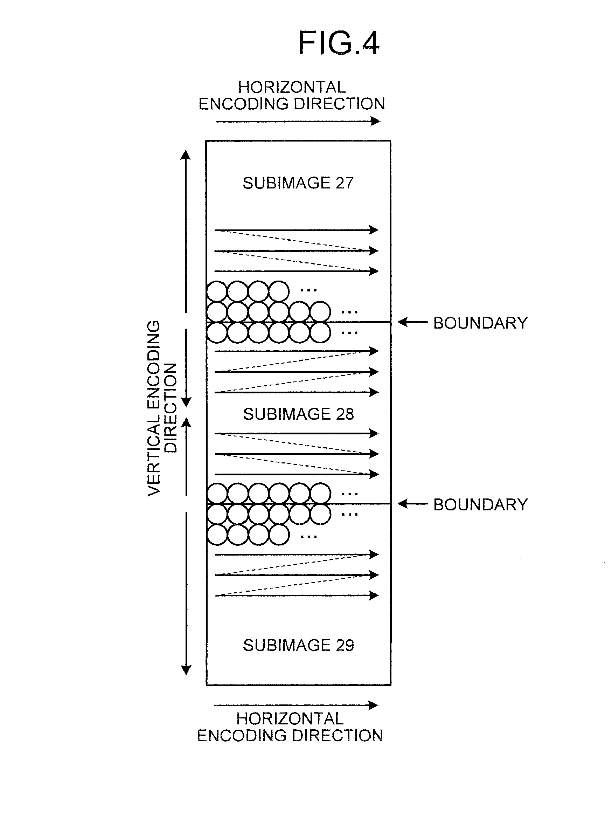

In an example illustrated in FIG. 4, an image is divided into subimages 27, 28, and 29, where the subimages 27 and 28 are vertically adjacent to each other, and the subimages 28 and 29 are vertically adjacent to each other. There are boundaries between the subimage 27 and the subimage 28 and between the subimage 28 and the subimage 29 (two boundaries). In the example of this drawing, the encoding device starts encoding in a vertical direction onto the subimages 27 and 29 sequentially from the boundaries in directions moving away from the boundaries. Moreover, the encoding device performs the encoding in a vertical direction onto the subimage 28 sequentially from the two boundaries toward the center.

More specifically, the encoding device performs the encoding onto the subimage 27 horizontally from the left side of the bottom end (boundary) to the right side. When the right end is reached, the encoding device shifts to one line above the current line and performs the encoding again from the left end to the right end.

Moreover, the encoding device performs the encoding onto the subimage 28 horizontally from the left side of the top end (boundary) to the right side. When the right end is reached, the encoding device shifts to one line below the current line below the current line and performs the encoding again from the left end to the wight end. Furthermore, the encoding device performs the encoding from the left side of the bottom end (boundary) to the right side. When the right end is reached, the encoding device shifts to one line above the current line and performs the encoding again from the left end to the right end. The encoding of the subimage 28 in the vertical direction starts from boundaries of the two sides (top end and bottom end) and is performed toward the center of the subimage 28.

The encoding device performs the encoding onto the subimage 29 from the left side of the top end (boundary). When the right end is reached, the encoding device shifts to one line below the current line and performs the encoding from the left end to the right end.

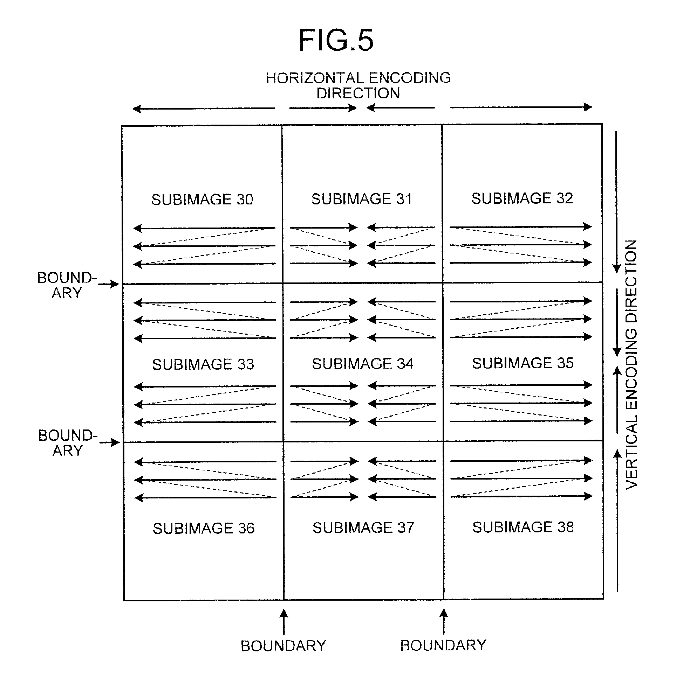

In an example of FIG. 5, an image is divided into subimages 30 to 38, forming boundaries between the subimages. When performing the encoding to the subimage 30 having two boundaries, the encoding device executes the encoding from the bottom end (boundary) of the right end (boundary) horizontally to the left side. When the left end is reached, the encoding device shifts to one line above the current line and performs the encoding from the right end to the left end.

When performing the encoding to the subimage 31 having three boundaries, the encoding device executes the encoding from the left end (boundary) of the bottom end (boundary) toward the center, and when the center is reached, the encoding device shifts to one line above the current line and performs the encoding again from the left boundary toward the center. In addition, the encoding device executes the encoding from the right end (boundary) of the bottom end (boundary) toward the center, and when the center is reached, the encoding device shifts to one line above the current line and performs the encoding again from the right boundary toward the center.

When performing the encoding to the subimage 32 having two boundaries, the encoding device executes the encoding horizontally from the left end (boundary) of the bottom end (boundary) to the right side. When the right end is reached, the encoding device shifts to one line above the current line and performs the encoding again from the left end to the right end and performs the encoding again from the left end to the right end.

When performing the encoding to the subimage 33 having three boundaries, the encoding device executes the encoding horizontally from the right end (boundary) of the top end (boundary) to the left side. When the left end is reached, the encoding device shifts to one line below the current line and performs the encoding again from the right end to the left end. In addition, the encoding device executes the encoding horizontally from the right end (boundary) of the bottom end (boundary) to the left side. When the left end is reached, the encoding device shifts to one line above the current line and performs the encoding again from the right end to the left end.

When performing the encoding to the subimage 34 having four boundaries, the encoding device executes the encoding from the left end (boundary) and the right end (boundary) of the top end (boundary) toward the center, and when the center is reached, the encoding device shifts to one line below the current line and performs the encoding again from the left boundary and the right boundary toward the center. In addition, the encoding device executes the encoding from the left end (boundary) and the right end (boundary) of the bottom end (boundary) toward the center, and when the center is reached, the encoding device shifts to one line above the current line and performs the encoding again from the left boundary and the right boundary toward the center.

When performing the encoding onto the subimage 35 having three boundaries, the encoding device executes the encoding horizontally from the left end (boundary) of the top end (boundary) to the right side. When the right end is reached, the encoding device shifts to one line below the current line and performs the encoding again from the left end to the right end. In addition, the encoding device executes the encoding horizontally from the left end (boundary) of the bottom end (boundary) to the right side. When the right end is reached, the encoding device shifts to one line above the current line and performs the encoding again from the left end to the right end.

When performing the encoding onto the subimage 36 having two boundaries, the encoding device executes the encoding horizontally from the right end (boundary) of the top end (boundary) to the left side. When the left end is reached, the encoding device shifts to one line below the current line and performs the encoding again from the right end to the left end.

When performing the encoding onto the subimage 37 having three boundaries, the encoding device executes the encoding from the left end (boundary) of the top end (boundary) toward the center, and when the center is reached, the encoding device shifts to one line below the current line and performs the encoding again from the left boundary toward the center. In addition, the encoding device executes the encoding from the right end (boundary) of the top end (boundary) toward the center, and when the center is reached, the encoding device shifts to one line below the current line and performs the encoding again from the right boundary toward the center.

When performing the encoding onto the subimage 38 having two boundaries, the encoding device executes the encoding horizontally from the left end (boundary) of the top end (boundary) to the right side. When the right end is reached, the encoding device shifts to one line below the current line and performs the encoding again from the left end to the right end.

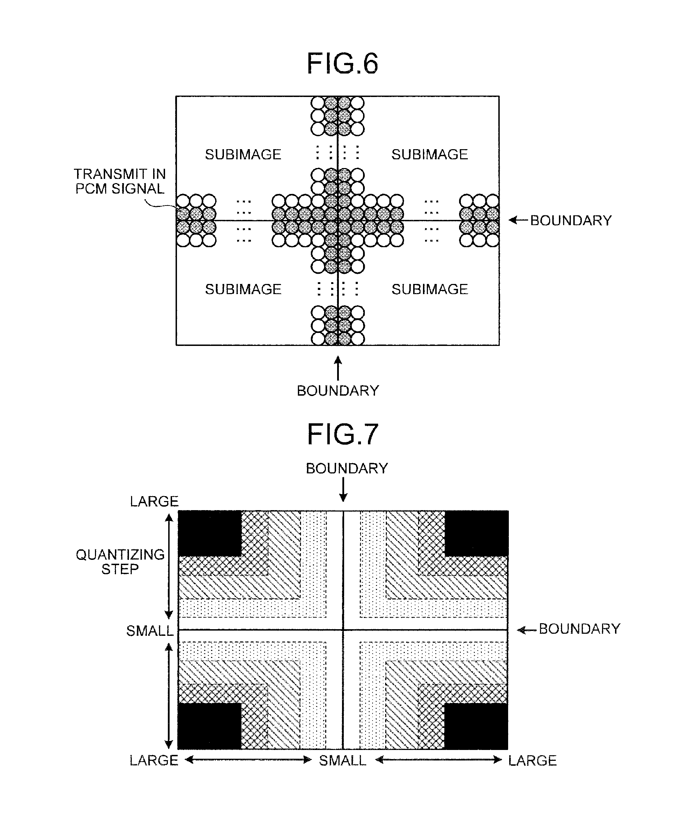

In addition to the processes explained with reference to FIGS. 1 to 5, the encoding device according to the present embodiment transmits the image in PCM signals, without encoding pixels in the vicinity of the boundaries (see FIG. 6). Furthermore, the encoding device according to the present embodiment changes the quantizing steps for encoding in accordance with the distance from the boundaries. As illustrated in FIG. 7, as pixels are positioned closer to the boundaries, a quantizing step becomes smaller, and as pixels are positioned further away from the boundaries, the quantizing step becomes larger.

In this manner, the encoding device according to the present embodiment divides the encoding-target image into several subimages and encodes the subimages in a direction moving away from the boundaries of the divided subimages, as explained with reference to FIGS. 1 to 5. Thus, even when the DPCM coding which degrades the image quality gradually in accordance with the encoding order to increase the transmission efficiency is performed, a difference in image quality at the boundary between the subimages can be reduced, and image degradation can be avoided.

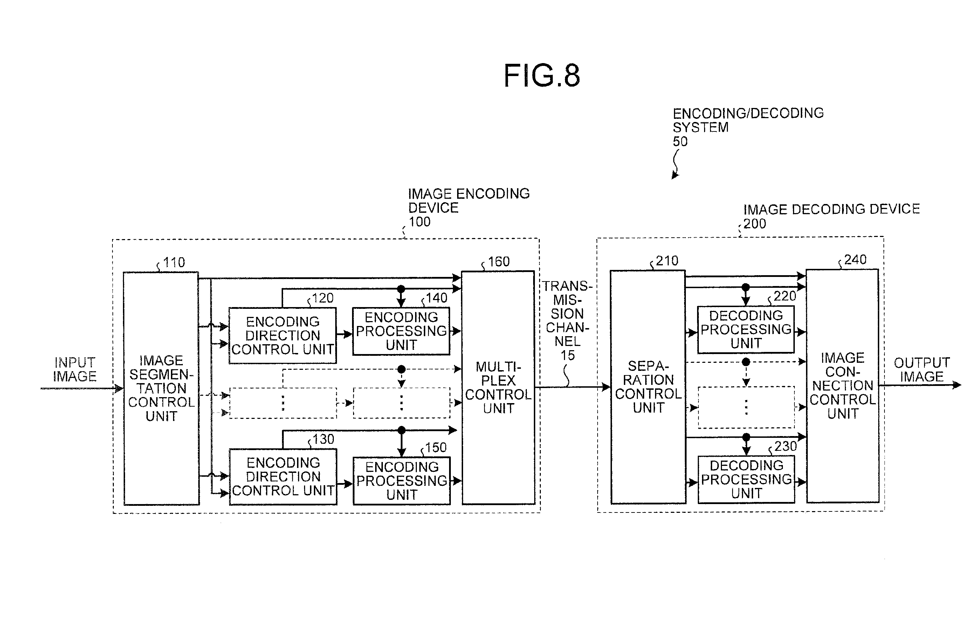

Furthermore, the encoding device according to the present embodiment does not encode pixels in the vicinity of the boundaries of the subimages, and changes the quantizing steps in accordance with the distance from the boundaries, as explained with reference to FIGS. 7 and 8. Thus, when the boundaries are connected, the image quality can still be improved.

Next, the structure of an encoding/decoding system according to the present embodiment is explained. FIG. 8 is a diagram for illustrating the structure of the encoding/decoding system according to the present embodiment. In this encoding/decoding system 50, as illustrated in this drawing, an image encoding device 100 and an image decoding device 200 are connected to each other by way of a transmission channel 15. The image encoding device 100 receives an input image, which serves as an encoding target, from an image input device (not illustrated), and the image decoding device 200 outputs the decoded output image to an image displaying device (not illustrated).

In FIG. 8, the image encoding device 100 is a device that divides the input image into subimages and encodes each of these subimages with the method indicated in FIGS. 1 to 7, and the image decoding device 200 is a device that decodes and connects the subimages encoded by the image encoding device 100 to generate an original image (output image). When the image encoding device 100 executes the encoding, a known technology such as DPCM coding is incorporated to perform the encoding.

The image encoding device 100 includes an image segmentation control unit 110, encoding direction control units 120 and 130, encoding processing units 140 and 150, and a multiplex control unit 160. The image encoding device 100 includes encoding direction control units other than the encoding direction control units 120 and 130, and encoding processing units other than encoding processing units 140 and 150, although those are not illustrated in the drawing.

The image segmentation control unit 110 is a processing unit that divides the input image that has been input into several subimages and outputs the divided subimages to the encoding direction control units 120 and 130. Furthermore, the image segmentation control unit 110 outputs image segmentation information to the encoding direction control units 120 and 130 and the multiplex control unit 160.

Here, the image segmentation information is information related to a method of dividing an input image and the like. For example, when dividing an input image as illustrated in FIG. 1 and outputting the subimage 20 to the encoding direction control unit 120, the image segmentation control unit 110 outputs to the encoding direction control unit 120 image segmentation information indicating that the input image is divided into two and that the subimage is the one on the left of the two divided images.

The encoding direction control unit 120 acquires the subimage and the image segmentation information, determines the encoding direction based on the image segmentation information (see FIGS. 1 to 5), and outputs the corresponding subimage data sequentially to the encoding processing unit 140 in accordance with the encoding direction. For example, when the image segmentation information includes information indicating that the input image is divided into two and information indicating that the subimage is the one on the left of the two divided images, the subimage data is output sequentially from the top right corner of the subimage horizontally to the left as the data of the encoding processing unit 140 (see FIG. 1).

In addition, the encoding direction control unit 120 includes a memory to store the subimage data so that it is provided for an encoding direction that is different from the order of the subimage data input from the image segmentation control unit 110. The explanation for the encoding direction control unit 130 is the same as that for the encoding direction control unit 120, and thus the explanation is omitted (the subimage data is output to the encoding processing unit 150 after the encoding direction is determined).

The encoding processing unit 140 is a processing unit that executes an encoding process onto the subimage input from the encoding direction control unit 120 and outputs the encoded data obtained by encoding the subimage to the multiplex control unit 160. Furthermore, the encoding processing unit 140 does not perform the encoding process onto pixels in the vicinity of the boundary of the subimage data (within a predetermined number of pixels from the boundary) but outputs the data of these pixels to the multiplex control unit 160 in PCM signals.

Moreover, the encoding processing unit 140 changes the quantizing steps in accordance with the distance from the boundary when executing the encoding.
The encoding processing unit 140 stores therein distances from the boundary in association with quantizing steps corresponding to the distances. The explanation for the encoding processing unit 150 is the same as that for the encoding processing unit 140, and thus the explanation is omitted.

The multiplex control unit 160 is a device that acquires the encoded data from the encoding controlling units 140 and 150 (or the PCM signals that are not encoded), generates multiplex data by multiplexing the acquired encoded data, and outputs the multiplex data to the image decoding device 200.

The multiplex control unit 160 creates a header including the image segmentation information and positional information of each subimage (coordinates of pixels included in the subimage), adds the created header to the multiplex data, and outputs it to the transmission channel 15. The multiplex control unit 160 contains a memory and thus is prepared for various input timings of the encoded data.

The image decoding device 200 includes a separation control unit 210, decoding processing units 220 and 230, and an image connection control unit 240. The image decoding device 20C includes decoding processing units other than the decoding processing units 220 and 230, although they is not illustrated in the drawing.

The separation control unit 210 is a processing unit that separates the multiplex data received through the transmission channel 15 into items of encoded data corresponding to the multiple subimages. Moreover, the separation control unit 210 extracts the positional information and the image segmentation information included in the header of the multiplex data, and outputs the positional information to the decoding processing unit 220 and the image segmentation information to the image connection control unit 240.

The decoding processing unit 220 is a processing unit that decodes encoded data in accordance with the positional information, selects the decoded data or the PCM data, and outputs it to the image connection control unit. In other words, the decoding processing unit 220 selects PMC data for pixels within a predetermined number thereof from the boundary of the subimage, and selects decoded data for pixels the predetermined number or greater thereof away from the boundary. The explanation for the decoding processing unit 230 is the same as that for the decoding processing unit 220, and thus the explanation is omitted.

Furthermore, when decoding the encoded data, the decoding processing unit 220 executes the decoding on the encoded data in a direction moving away from the boundary of the subimage.

The image connection control unit 240 is a processing unit that, when receiving the subimage data from the decoding processing units 220 and 230, stores the subimage data in the frame memory and connects it in accordance with the image segmentation information to generate an output image (image data before the segmentation). The image connection control unit 240 outputs the generated output image to the image displaying device (not illustrated).

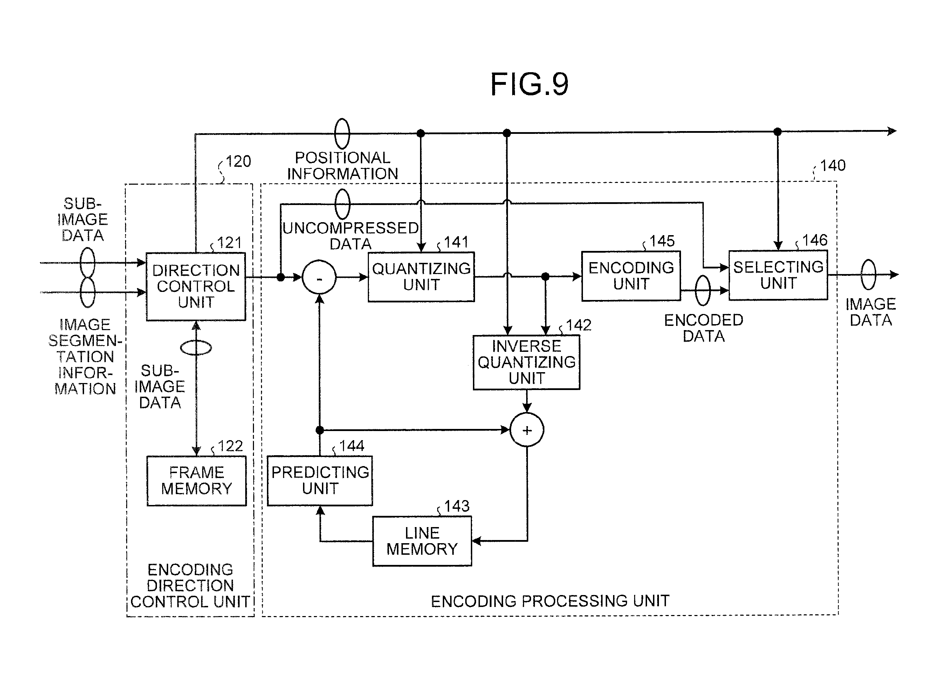

Next, the structures of the encoding direction control unit 120 and the encoding processing unit 140 illustrated in FIG. 8 are explained. FIG. 9 is a functional block diagram for illustrating the structures of the encoding direction control unit 120 and the encoding processing unit 140. As illustrated in this drawing, the encoding direction control unit 120 includes a direction control unit 121 and a frame memory 122, and the encoding processing unit 140 includes a quantizing unit 141, an inverse quantizing unit 142, a line memory 143, a predicting unit 144, an encoding unit 145, and a selecting unit 146.

The direction control unit 121 is a processing unit that acquires the subimage data (data of the encoding-target subimage) and the image segmentation information, determines the encoding direction based on the image segmentation information, and outputs the subimage data in the encoding direction sequentially to the encoding processing unit 140. (In other words, the direction control unit 121 determines the position of the boundary of the subimage data based on the image segmentation information and outputs the subimage data in order of the direction moving away from the boundary (see FIGS. 1 to 5) to the encoding processing unit 140).

Otherwise, the direction control unit 121 temporarily stores the subimage data in the frame memory, and then reads out the subimage data of the encoding start position and outputs it to the encoding processing unit 14C. The direction control unit 121 also outputs the positional information of pixels included in the subimage data to the quantizing unit 141, the inverse quantizing unit 142, and the selecting unit 146. The frame memory 122 is a storage unit that stores therein the subimage data.

The quantizing unit 141 is a processing unit that changes the quantizing steps and quantizes uncompressed data, based on the positional information. Here, the uncompressed data is data obtained from a difference between the subimage data output by the direction control unit 121 and prediction data output by the predicting unit 144.

The quantizing unit 141 stores therein a quantizing step table in which distances from the boundary and quantizing steps are associated with each other, determines a quantizing step for the uncompressed data by comparing the quantizing table and the positional information, and quantizes the uncompressed data in accordance with the quantizing step obtained as a result of the determination. The quantizing unit 141 outputs the quantized uncompressed data to the inverse quantizing unit 142 and the encoding unit 145.

The inverse quantizing unit 142 is a processing unit that changes the quantizing steps based on the positional information and executes inverse quantization on the quantized uncompressed data. The inverse quantizing unit 142 holds the above quantizing table, determines a quantizing step by comparing the quantizing table and the positional information, and executes the inverse quantization in accordance with the quantizing step obtained as a result of the determination.

The inverse quantizing unit 142 outputs the data that has been subjected to the inverse quantization to the line memory 143. The line memory 143 is a storage unit that stores therein data obtained by adding the data output by the inverse quantizing unit 142 and the prediction data output by the predicting unit 144. The data stored in the line memory 143 corresponds to data of pixels adjacent to the encoding-target pixels (adjacent pixel data).

The predicting unit 144 is a processing unit that reads the data stored in the line memory 143 (adjacent pixel data) and outputs the read-out data as prediction data. The encoding unit 145 is a processing unit that acquires the quantized uncompressed data that is output by the quantizing unit 141 and sequentially encodes the acquired data. The encoding unit 145 outputs the data that is encoded (encoded data) to the selecting unit 146.

The selecting unit 146 acquires the positional information, the subimage data that is not encoded (PCM signal), and the encoded data, selects either one of the PCM signal and the encoded data in accordance with the positional information, and outputs the selected data as image data to the multiplex control unit 160.

Based on the image segmentation information (the selecting unit 146 also acquires image segmentation information) and the positional information, the selecting unit 146 selects the PMC signal when the pixel (PCM signal or encoded data) is positioned within a predetermined value away from the boundary (i.e., in the vicinity of the boundary), and selects the encoded data when the pixel is positioned further away than the predetermined value from the boundary (i.e., not in the vicinity of the boundary).

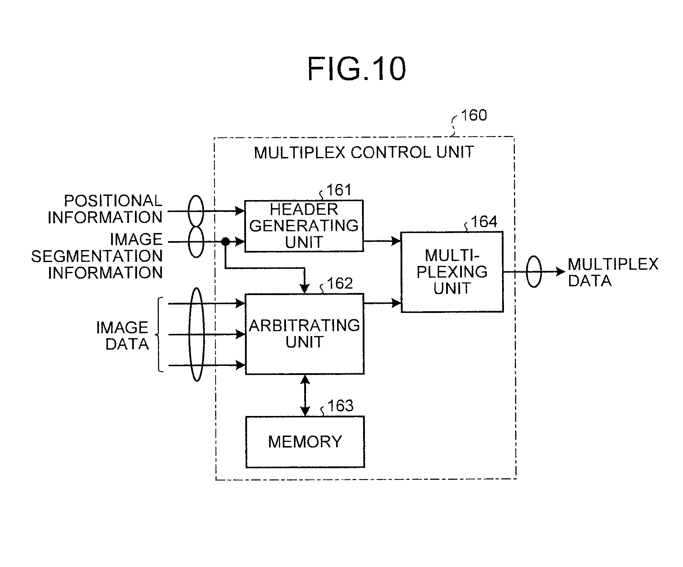

Next, the structure of the multiplex control unit 160 illustrated in FIG. 8 is explained. FIG. 10 is a functional block diagram for illustrating the structure of the multiplex control unit 160. As illustrated in this drawing, the multiplex control unit 160 includes a header generating unit 161, an arbitrating unit 162, a memory 163, and a multiplexing unit 164.

The header generating unit 161 is a processing unit that acquires the positional information and the image segmentation information and generates header information from the acquired data. The header generating unit 161 outputs the generated header information to the multiplexing unit 164.

The arbitrating unit 162 is a processing unit that acquires the image segmentation information, also acquires image data from the encoding devices that are arranged in parallel, and outputs the image data to the multiplexing unit 164 based on the image segmentation information. When receiving multiple items of image data at a time, the arbitrating unit 162 stores these items of image data in the memory 163, and then outputs an item of image data corresponding to the positional information and the image segmentation information included in the header information to the multiplexing unit 164. The memory 163 is a storage unit that stores therein the image data.

The multiplexing unit 164 is a processing unit that, when receiving the header information and the image data (the encoded subimage data or the PCM signal), generates multiplex data by multiplexing the header information and the image data and outputs the generated multiplex data to the image decoding device 200.

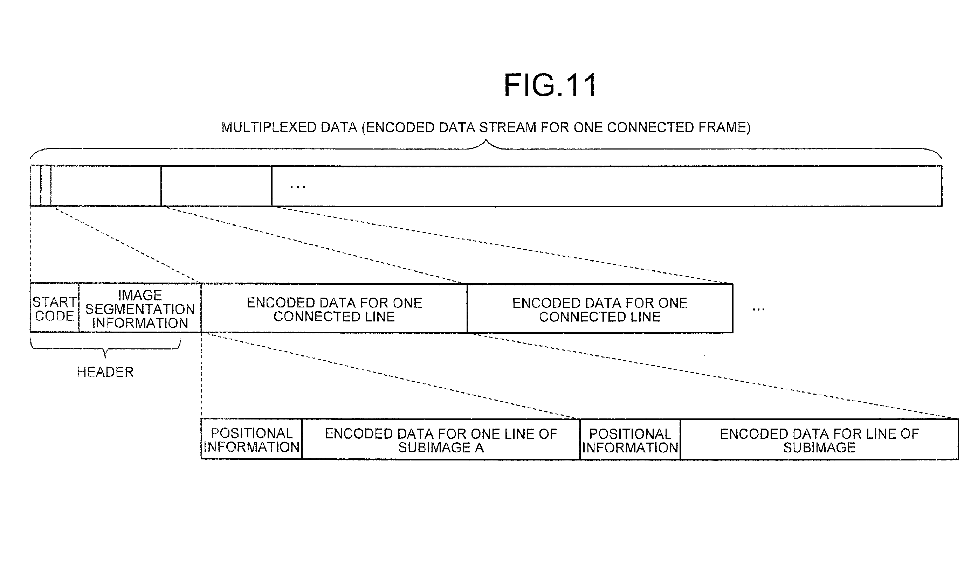

FIG. 11 is a diagram for illustrating an example data structure of the multiplex data. As illustrated in this drawing, this multiplex data includes a header and encoded data of one connected line. The header includes a start code indicating that the frame is a leading one and unit image segmentation information. Furthermore, encoded data of a connected position line includes the positional information of the encoded data and the encoded data.

For example, when the input image is divided as illustrated in FIG. 1 and the encoding is performed on each of the subimages 20 and 21, the image segmentation information includes information indicating that the input image is divided into two, and the encoded data of one connected line includes encoded data of a line of the subimage 20, the positional information thereof, encoded data of a line of the subimage 21, and the positional information thereof.

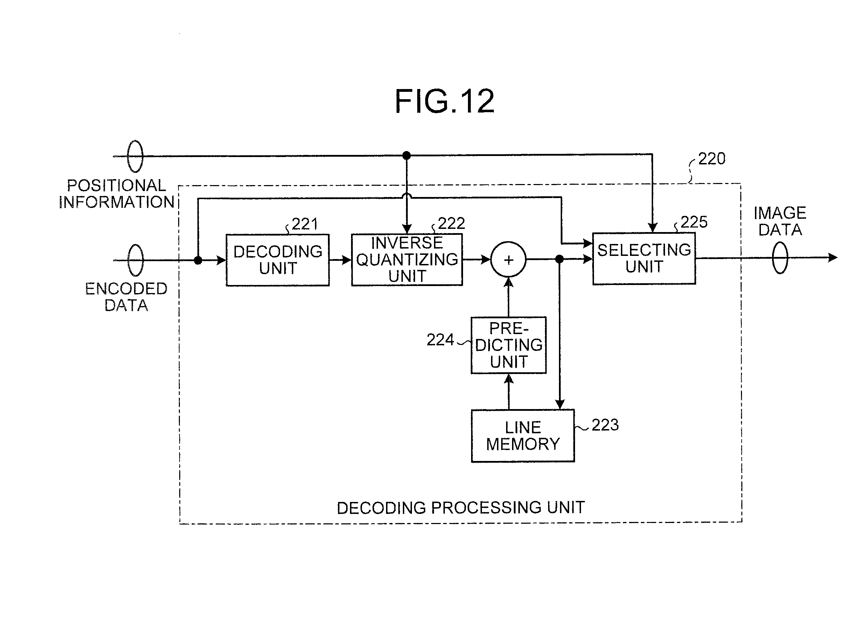

Next, the structure of the decoding processing unit 220 illustrated in FIG. 8 is explained. FIG. 12 is a functional block diagram for illustrating the structure of the decoding processing unit 220. As illustrated in this drawing, the decoding processing unit 220 includes a decoding unit 221, an inverse quantizing unit 222, a line memory 223, a predicting unit 224, and a selecting unit 225.

The decoding unit 221 is a processing unit that acquires the encoded data from the separation control unit 210 and decodes the acquired encoded data. The decoding unit 221 outputs the data that is decoded (decoded data) to the inverse quantizing unit 222.

The inverse quantizing unit 222 is a processing unit that acquires the positional information and the decoded data, changes the quantizing steps based on the positional information, and executes inverse quantization onto the decoded data. The inverse quantizing unit 222 holds the above quantizing table, determined a quantizing step by comparing the quantizing table and the positional information, and executes the inverse quantization in accordance with the quantizing step obtained as a result of the determination.

The inverse quantizing unit 222 outputs the data that is subjected to the inverse quantization to the selecting unit 225 and the line memory 223. The line memory 223 is a storage unit that stores therein data obtained by adding the data output by the inverse quantizing unit 222 and the data output by the predicting unit 224. The data stored in the line memory 223 corresponds to data of pixels adjacent to the decoding-target pixels (adjacent pixel data).

The predicting unit 224 is a processing unit that reads the data stored in the line memory 223 (adjacent pixel data) and outputs the read-out data as predication data. The predicting unit 224 adds the prediction data received from the predicting unit 224 to the data that has been subjected to the inverse quantization to represent the image data before being encoded, and inputs the image data to the selecting unit 225.

The selecting unit 225 is a processing unit that acquires the positional information, the subimage data that is not encoded (PMC signal), and the decoded image data, selects either one of the PCM signal and the decoded image data in accordance with the positional information, and outputs the selected data as image data to the image connection control unit 240.

Based on the image segmentation information (the selecting unit 225 also acquires the image segmentation information) and the positional information, the selecting unit 225 selects the PMC signal when the pixel (PCM signal or image data) is positioned within a predetermined value away from the boundary (i.e., in the vicinity of the boundary), and selects the image data when the pixel is positioned further away than the predetermined value from the boundary (i.e., not in the vicinity of the boundary).

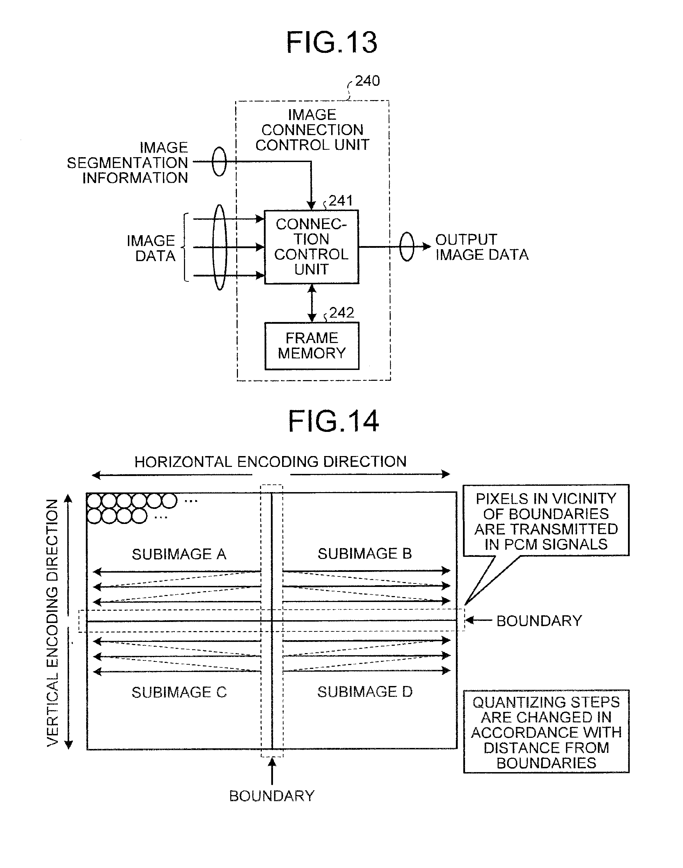

Next, the structure of the image connection control unit 240 indicated in FIG. 8 is explained. FIG. 13 is a functional block diagram for illustrating the structure of the image connection control unit 240. As illustrated in this drawing, the image connection control unit 240 includes a connection control unit 241 and a frame memory 242.

The connection control unit 241 is a processing unit that acquires the image segmentation information and also acquires the image data (from the decoding processing units 220 arranged in parallel), connects items of image data based on the image segmentation information, and thereby generates output image data. The connection control unit 241 stores the items of image data in the frame memory 242. The connection control unit 241 connects the items of image data based on the image segmentation information when writing the image data into or reading it from the frame memory.

FIG. 14 is a diagram for explaining the encoding/decoding process according to the present embodiment. In the example illustrated in FIG. 14, an HDTV image (1920×1080) is divided into four, and the process is performed in parallel by use of four cores (the encoding direction control units and the encoding processing units) that can encode and decode SD images (720×480).

The encoding starts from the lower right corner of a subimage A, the lower left corner of a subimage B, the upper right of a subimage C, and the upper left of a subimage D. The pixels in the vicinity of the boundary are transmitted on PCM signals, without being compressed. Furthermore, small quantizing steps are adopted for the vicinity of the boundary in the encoding, and larger quantizing steps are adopted as being further away from the boundary.

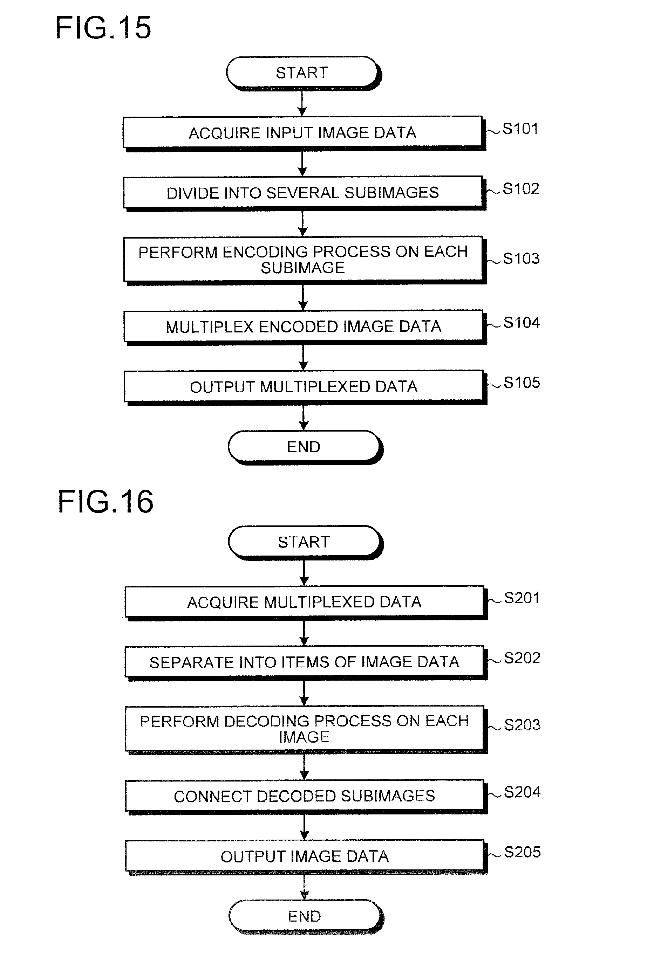

Next, the processing procedure of the image encoding device 100 according to the present embodiment is explained. FIG. 15 is a flowchart for illustrating the processing procedure of the image encoding device 100 according to the present embodiment. As illustrated in this drawing, the image encoding device 100 acquires the input image data (step S101), and divides the input image into several subimages (step S102).

Then, the image encoding device 100 executes the encoding process on each subimage (step S103). At step S103, the image encoding device 100 executes the encoding in a direction moving away from the boundary of the subimages. Moreover, the image encoding device 100 transmits pixels in the vicinity of the boundary on PCM signals, without compressing them. In addition, smaller quantizing steps are used for the vicinity of the boundary, while larger quantizing steps are used in the encoding as being further away from the boundary.

Thereafter, the image encoding device 100 multiplexes the encoded image data (step S104), and outputs the multiplexed data to the image decoding device 200 (step S105).

In this manner, the image encoding device 100 executes the encoding in a direction moving away from the boundary main of the subimages, and thus image degradation can be avoided at the boundary.

Next, the processing procedure of the image decoding device 200 according to the present embodiment is explained. FIG. 16 is a flowchart of the processing procedure of the image decoding device 200 according to the present embodiment. As illustrated in this drawing, the image decoding device 200 acquires the multiplexed data (step S201), and separates the acquired multiplexed data into several items of image data (step S202).

Then, the image decoding device 200 executes the decoding process on each image (step S203). At step S203, the image decoding device 200 executes the decoding in the direction moving away from the boundary of the images. Further, the image decoding device 200 selects PCM signals as the pixels in the vicinity of the boundary (while selecting decoded image data for pixels that are not in the vicinity of the boundary). In addition, smaller quantizing steps are used for the vicinity of the boundary, and larger quantizing steps are used as being further away from the boundary.

Thereafter, the image decoding device 200 connects the decoded image data (subimages) (step S204), and outputs the generated output image data (step S205).

In this manner, the image decoding device 200 executes the decoding in a direction moving away from the boundary of the images, and selects PCM signals for the pixels in the vicinity of the boundary (while selecting the decoded image data for the pixels that are not in the vicinity of the boundary). In addition, smaller quantizing steps are used for the vicinity of the boundary, while larger quantizing steps are used as being further away from the boundary. Hence, the image data that is output after the connection can be prevented from being degraded.

As described above, the encoding/decoding system according to the present embodiment divides an encoding-target image into several subimages when encoding the image, and performs the encoding on the subimages in a direction moving away from the boundaries of the divided subimages. Thus, even when DPCM coding is performed in which the image quality is degraded gradually in order of encoding to improve the transmission efficiency, a difference in image quality at the boundary of the subimages can be reduced, and the image degradation can be avoided.

In addition, the encoding/decoding system according to the present embodiment transmits the pixels in the vicinity of the boundary of the subimages as uncompressed data, without encoding them. Thus, the image quality of the boundary area is prevented from being degraded, and the boundary created when connecting the subimages becomes less noticeable.

In addition, the encoding/decoding system according to the present embodiment changes quantizing steps that are used for encoding in accordance with the distance from the boundary so that an amount of data greater than the predetermined value can be assigned to the vicinity of the boundary by using a small quantizing step. Thus, the degradation of an image is suppressed, and the boundary becomes less noticeable.

Among the above-explained processes according to the present embodiment, all or part of the processes that are described as being automatically performed can be manually performed, or all or part of the processes that are described as being manually performed can be performed automatically with a known method. Besides these processes, the processing procedure, the controlling procedure, specific names, and information including various kinds of data and parameters that are mentioned in the above explanation and drawings can be arbitrarily changed unless otherwise stated.

In addition, the structural components of the image encoding device 100 and the image decoding device 200 illustrated in FIG. 8 and others are functionally conceptual ones, and therefore they do not have to be physically configured as illustrated. In other words, distribution and integration of the devices are not limited to the illustrated manner, and all or part of the devices may be functionally or physically distributed or integrated in any units in accordance with various loads and usage. Furthermore, all or any part of the processing functions of the devices are realized by the CPU and a program analyzed and implemented by the CPU, or may be realized as hard wired logic.

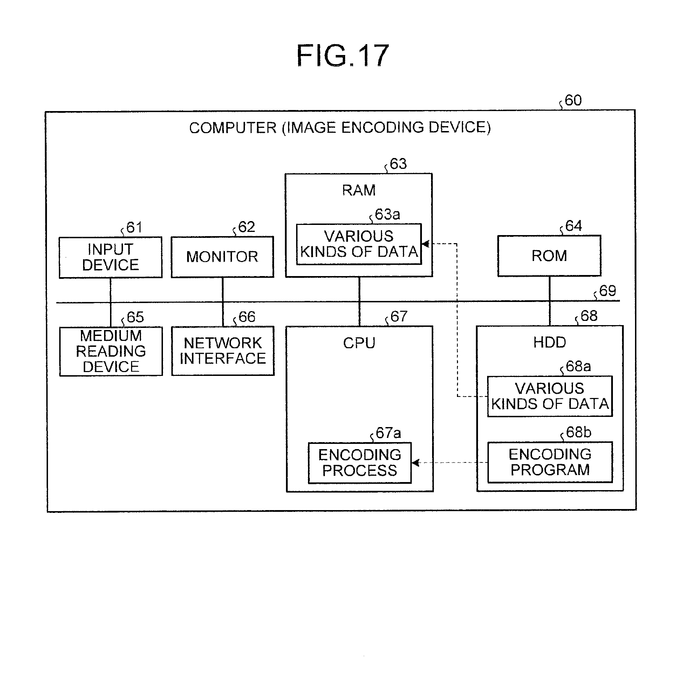

FIG. 17 is a diagram for illustrating the hardware structure of a computer that forms an image encoding device according to the present embodiment. As illustrated in FIG. 17, this computer (image encoding device) 60 includes an input device 61 that receives various kinds of data, a monitor 62, a random access memory (RAM) 63, a read only memory (ROM) 64, a medium reading device 65 that reads data from a storage medium, a network interface 66 that performs data transmission and reception with other devices (such as the image decoding device 200), a central processing unit (CPU) 67, and a hard disk drive (HDD) 68, connected by way of a bus 69.

Then, an encoding program 68b that performs the same function as that of the above image encoding device 100 is stored in the HDD 68. The CPU 67 reads and implements the encoding program 68b to start an encoding process 67a. This encoding process 67a corresponds to the image segmentation control unit 110, the encoding direction control units 120 and 130, the encoding processing units 140 and 150, and the multiplex control unit 160 that are illustrated in FIG. 8.

Moreover, various kinds of data used for the encoding process are stored in the HDD 68. The CPU 67 reads various kinds of data 68a stored in the HDD 68, stores it in the RAM 63, performs the encoding by use of various kinds of data 63a stored in the RAM 63, and outputs the encoded data to the image decoding device.

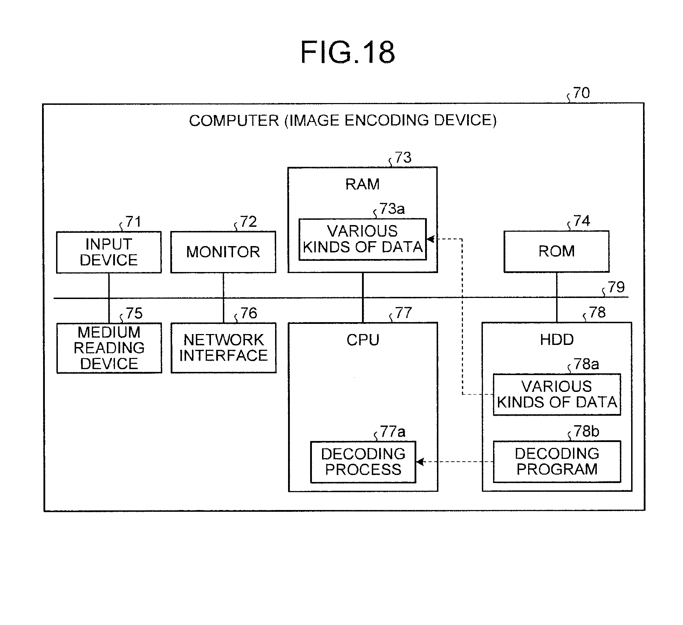

FIG. 18 is a diagram for illustrating the hardware structure of a computer that forms an image decoding device according to the present embodiment. As illustrated in FIG. 18, this computer (image decoding device) 70 includes an input device 71 that receives various kinds of data, a monitor 72, a random access memory (RAM) 73, a read only memory (ROM) 74, a medium reading device 75 that reads data from a storage medium, a network interface 76 that performs data transmission and reception with other devices (such as the image encoding device 100), a central processing unit (CPU) 77, and a hard disk drive (HDD) 78, connected by way of a bus 79.

Then, a decoding program 78b that performs the same function as that of the above image decoding device 200 is stored in the HDD 78. The CPU 77 reads and implements the decoding program 78b to start a decoding process 77a. This decoding process 77a corresponds to the separation control unit 210, the decoding processing units 220 and 230, and the image connection control unit 240 illustrated in FIG. 8.

Moreover, various kinds of data used for the encoding process are stored in the HDD 78. The CPU 77 reads data 78a stored in the HDD 78, stores it in the RAM 73, performs the decoding by use of data 73a stored in the RAM 73, and outputs the decoded data to the monitor 72.

The encoding program 68b and the decoding program 78b indicated in FIGS. 17 and 18 do not always have to be stored in the HDD 68 or 78 in advance. For example, the encoding program 68b and the decoding program 78b may be stored in a "portable physical medium" inserted into the computer such as a flexible disk (FD), a CD-ROM, a DVD disk, a magneto optical disk, and an IC card; a "fixed physical medium" arranged inside or outside the computer such as a hard disk drive (HDD); or "a different computer (or server)" connected to the computer by way of a public line, the Internet, a LAN, or a WAN so that the computer can read the encoding program 68b and the decoding program 78b from these.

### INDUSTRIAL APPLICABILITY

As discussed above, the encoding device and the decoding device according to the present invention are effective for a transmission system that executes encoding and decoding by dividing an image to efficiently transmit signals of a high sampling rate, and is suitable especially to solve the image degradation problem when the divided images are decoded and combined.

## Claims

1. An encoding device for encoding an image, comprising:
an image dividing unit that divides an encoding-target image into a plurality of subimages; and
an encoding executing unit that acquires the subimages that are divided by the image dividing unit and executes the encoding of the subimages in a direction moving away from a boundary of the subimages that are acquired.

2. The encoding device according to claim 1, wherein, when a subimage having one boundary with another subimage horizontally adjacent thereto is encoded, the encoding executing unit executes the encoding in a horizontal direction of the subimage in order of the direction moving away from the boundary.

3. The encoding device according to claim 1, wherein, when a subimage having one boundary with another subimage vertically adjacent thereto is encoded, the encoding executing unit executes the encoding in a vertical direction of the subimage in order of the direction moving away from the boundary.

4. The encoding device according to claim. 1, wherein, when a subimage having two boundaries with another subimage horizontally adjacent thereto is encoded, the encoding executing unit executes the encoding in a horizontal direction of the subimage in order of directions from the two boundaries toward a center.

5. The encoding device according to claim 1, wherein, when a subimage having two boundaries with another subimage vertically adjacent thereto is encoded, the encoding executing unit executes the encoding in a vertical direction of the subimage in order of directions from the two boundaries toward a center.

6. The encoding device according to claim 1, wherein, when a subimage having two boundaries with another subimage arranged vertically adjacent thereto and another subimage arranged horizontally adjacent thereto is encoded, the encoding executing unit executes the encoding in a horizontal direction of the subimage in order of a direction moving away from the boundaries and executes encoding in a vertical direction of the subimage in order of a direction moving away from the boundaries.

7. The encoding device according to claim 1, wherein, when a subimage having two horizontal boundaries and one vertical boundary is encoded, the encoding executing unit executes the encoding in a horizontal direction of the subimage in order of directions from the two horizontal boundaries toward a center and executes the encoding in a vertical direction of the subimage in order of a direction moving away from the boundary.

8. The encoding device according to claim 1, wherein, when a subimage having one horizontal boundary and two vertical boundaries is encoded, the encoding executing unit executes the encoding in a horizontal direction of the subimage in order of a direction moving away from the boundary and executes the encoding in a vertical direction of the subimage in order of directions from the two boundaries toward a center.

9. The encoding device according to claim 1, wherein, when a subimage having two horizontal boundaries and two vertical boundaries is encoded, the encoding executing unit executes the encoding in a horizontal direction of the subimage in order of directions from the two horizontal boundaries toward a center and executes the encoding in a vertical direction of the subimage in order of directions from the two boundaries toward a center.

10. The encoding device according to any one of claims 1 to 9, wherein the encoding executing unit executes the encoding on pixels that are not positioned within a predetermined number of pixels away from the boundary of the subimage.

11. The encoding device according to claim 10, wherein the encoding executing unit changes quantizing steps used in the encoding in accordance with a distance from the boundary of the subimage.

12. The encoding device according to claim 11, further comprising an output unit that outputs the subimage encoded by the encoding executing unit, wherein, when outputting the subimage that is encoded, the output unit adds segmentation information representing a segmentation method of the image dividing unit and positional information of pixels of the subimage.

13. A decoding device for decoding an original image by decoding a plurality of subimages that are encoded and combining the subimages that are decoded at boundaries, comprising:
a separating unit that separates, when receiving a plurality of subimages that are encoded and form the original image, the subimages that are acquired; and
a decoding executing unit that acquires the subimages separated by the separating unit and executes the decoding on the subimages in a direction moving away from a boundary of the subimages that are acquired.

14. An encoding/decoding system comprising an encoding device that encodes an image and a decoding device that decodes the image, wherein
the encoding device comprises:
an image dividing unit that divides an encoding-target image into a plurality of subimages;
an encoding executing unit that acquires the subimages divided by the image dividing unit and executes the encoding on the subimages in a direction moving away from a boundary of the subimages that are acquired; and
an output unit that multiplexes and outputs the subimages encoded by the encoding executing unit, and
the decoding device comprises:
a separating unit that separates the subimages that are multiplexed when acquiring the subimages that are multiplexed; and
a decoding executing unit that acquires the subimages that are separated by the separating unit and executes the decoding on the subimages in a direction moving away from the boundary of the subimages that are acquired.

15. An encoding method used by an encoding device for encoding an image, comprising:
a storing step of acquiring an encoding-target image and storing the encoding-target image in a storage device;
an image dividing step of extracting the encoding-target image from the storage device and dividing the image into a plurality of subimages; and
an encoding executing step of acquiring the subimages divided at the image dividing step and executing the encoding on the subimages in a direction moving away from the boundary of the subimages that are acquired.

16. A decoding method used by a decoding device for decoding an original image by decoding a plurality of subimages that are encoded and combining the subimages that are decoded at a boundary, comprising:
a storing step of acquiring the subimages that are encoded and form the original image and storing the subimages in a storage device;
a separating step of separating the subimages stored in the storage device; and
a decoding executing step of acquiring the subimages separated at the separating step and executing the decoding on the subimages in a direction moving away from the boundary of the subimages that are acquired.

17. An encoding program for causes a computer to execute:
a storage step of acquiring an encoding-target image and storing the encoding-target image in a storage device;
an image dividing step of extracting the encoding-target image from the storage device and dividing the image into a plurality of subimages; and
an encoding executing step of acquiring the subimages divided at the image dividing step and executing encoding on the subimages in a direction moving away from a boundary of the subimages that are acquired.

18. A decoding program for causing a computer to execute:
a storage step of acquiring a plurality of subimages that are encoded and form an image and storing the subimages in a storage device;
a separating step of separating the subimages stored in the storage device; and
a decoding executing step of acquiring the subimages separated at the separating step and executing decoding on the subimages in a direction moving away from a boundary of the subimages that are acquired.
